# EUROPEAN PATENT APPLICATION

(11) **EP 2 570 903 A1**
(43) Date of publication of application: **20.03.2013**
(21) Application number: 11181421.6
(22) Date of filing: 15.09.2011
(51) Int. Cl.: G06F 3/048

(54) **Method, computer program and apparatus for enabling selection of an object on a graphical user interface**

(71) Applicant: Uniqoteq Oy, 20540 Turku (FI)
(72) Inventor: Tapiola, Antti, 25460 Kisko (FI); Hakunti, Jussi, 20900 Turku (FI)
(74) Representative: Papula Oy

(57) **Abstract**

According to one embodiment, there is provided a method comprising causing display of information content comprising objects on a graphical user interface; activating a predictive cursor function in response to identifying a predetermined action from a user; receiving a cursor movement action from the user, wherein the movement speed of the cursor is lower than a threshold value; determining a cursor position on the graphical user interface; highlighting on the graphical user interface an object that is the closest object in relation to the cursor position; and changing the highlighted object on the graphical user interface in the direction of the cursor movement action while the cursor movement action continues and the movement speed of the cursor is lower than the threshold value.

## Description

### FIELD OF THE INVENTION

The invention relates to graphical user interfaces. More specifically, the invention relates to a solution for enabling selection of an object on a graphical user interface quickly and easily.

### BACKGROUND OF THE INVENTION

Graphical user interfaces typically implement a pointing and selection function in a way that a user needs to move a cursor on a screen to a desired position and confirm a selection typically by a button press with a pointing device. The pointing device may be a traditional mouse, a touch pad, a joystick or a similar device which provides means for moving the cursor and then performing the selection.

Usability with the different types of the pointing devices varies. For example, a touch pad of a device is typically relatively small and it needs to be very sensitive to provide means for moving cursor across a graphical user interface. If the sensitivity of the touch pad is increased, a user can move across the graphical user interface quickly but suffers on the other hand from bad accuracy, making it difficult to perform selections, for example from web page. If the sensitivity is set lower, the accuracy is better but it is difficult to move cursor over the user interface in order to make a selection.

Furthermore, in a graphical user interface, usually the user needs to move pointing device to the certain area in the screen to make selection. Usually a user interface has been divided into a menu area and a content area, where especially selections from the content area has been requiring user to move the pointing device to the desired area to make selection.

Based on the above, there is a need for a solution that would solve or at least mitigate the above drawbacks. Especially, there is a need for a solution that enables an easy and quick selection of an object from a graphical user interface.

### SUMMARY

According to a first aspect of the invention, there is provided a method, comprising causing display of information content comprising objects on a graphical user interface; activating a predictive cursor function in response to identifying a predetermined action from a user; receiving a cursor movement action from the user, wherein the movement speed of the cursor is lower than a threshold value; determining a cursor position on the graphical user interface; highlighting on the graphical user interface an object in the direction of the cursor movement that is the closest object in relation to the cursor position; and changing the highlighted object on the graphical user interface in the direction of the cursor movement action while the cursor movement action continues and the movement speed of the cursor is lower than the threshold value.

In one embodiment, the method further comprises when the cursor movement action ends, keeping highlighted the object that was the latest highlighted object.

In one embodiment, the method further comprises causing display of the information content in a first window; and wherein the highlighting comprises highlighting the object in a second window.

In one embodiment, the method further comprises providing a virtual cursor indicating the location of the highlighted object.

In one embodiment, the method further comprises receiving a selection of the highlighted object; and moving the cursor to the area of the selected object.

In one embodiment, wherein the predetermined action comprises one of the following: a cursor movement action, wherein the movement speed of the cursor is lower than a threshold value; a predetermined user action with a keyboard; and a predetermined user action with a pointing device.

In one embodiment, an object comprises a selectable graphical object or a selectable textual link.

In one embodiment, wherein the highlighting comprises at least one of the following: a sound or sounds; animation of the object; increased object size; a virtual cursor indicating the object.

According to a second aspect of the invention, there is provided a computer program comprising program code for implementing the method. In one embodiment, the computer program is embodied on a computer-readable medium.

According to a third aspect of the invention, there is provided an apparatus comprising means for causing display of information content comprising objects on a graphical user interface; means for activating a predictive cursor function in response to identifying a predetermined action from a user; means for receiving a cursor movement action from the user, wherein the movement speed of the cursor is lower than a threshold value; means for determining a cursor position on the graphical user interface; means for highlighting on the graphical user interface an object in the direction of the cursor movement that is the closest object in relation to the cursor position; and means for changing the highlighted object on the graphical user interface in the direction of the cursor movement action while the cursor movement action continues and the movement speed of the cursor is lower than the threshold value.

In one embodiment, the apparatus further comprises means for keeping highlighted the object that was the latest highlighted object, when the cursor movement action ends.

In one embodiment, the apparatus further comprises means for causing display of the information content in a first window; and wherein the highlighting comprises highlighting the object in a second window.

In one embodiment, the apparatus further comprises means for providing a virtual cursor indicating the location of the highlighted object.

In one embodiment, the apparatus further comprises means for receiving a selection of the highlighted object; and means for moving the cursor to the area of the selected object.

In one embodiment, the predetermined action comprises one of the following: a cursor movement action, wherein the movement speed of the cursor is lower than a threshold value; a predetermined user action with a keyboard; and a predetermined user action with a pointing device.

In one embodiment, an object comprises a selectable graphical object or a selectable textual link.

In one embodiment, the highlighting comprises at least one of the following: a sound or sounds; animation of the object; increased object size; and a virtual cursor indicating the object.

According to a fourth aspect of the invention, there is provided an apparatus comprising at least one processor and at least one memory connected to the at least one processor, wherein the at least one processor is configured to cause the apparatus to cause display of information content comprising objects on a graphical user interface; activate a predictive cursor function in response to identifying a predetermined action from a user; receive a cursor movement action from the user, wherein the movement speed of the cursor is lower than a threshold value; determine a cursor position on the graphical user interface; highlight on the graphical user interface an object in the direction of the cursor movement that is the closest object in relation to the cursor position; and change the highlighted object on the graphical user interface in the direction of the cursor movement action while the cursor movement action continues and the movement speed of the cursor is lower than the threshold value.

The benefits of the invention are related to improved user interfaces where the user is able to go through selectable objects easily and quickly with only small movements with a pointing device.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a block diagram illustrating a method according to one embodiment of the invention;
**Figure 2** is a view on a graphical user interface according to one embodiment of the invention;
**Figure 3A** is a view on a graphical user interface according to another embodiment of the invention;
**Figure 3B** is a view on a graphical user interface according to another embodiment of the invention;
**Figure 3C** is a view on a graphical user interface according to another embodiment of the invention;
**Figures 3D-3G** illustrate views on a graphical user interface that provide a virtual cursor indicating the location of a highlighted link according to one embodiment of the invention; and
**Figure 4** is a block diagram of an apparatus according to one embodiment of the invention.

### DETAILED DESCRIPTION OF THE INVENTION

Reference will now be made in detail to the embodiments of the present invention, examples of which are illustrated in the accompanying drawings.

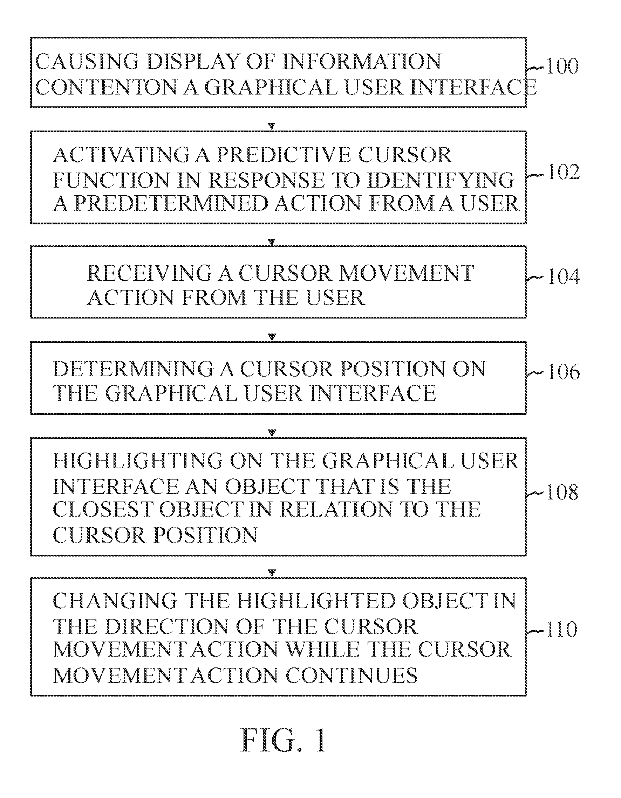

Figure 1 is a block diagram illustrating a method according to one embodiment of the invention. At step 100 information content is displayed on a graphical user interface. The term information content refers to any content (e.g. images, links, objects, additional audio etc.) that can be displayed on a display. At step 102 a predictive cursor function is activated in response to identifying a predetermined action from a user. The predetermined action is for example a cursor movement action, where the movement speed of the cursor is lower than a threshold value. If the movement speed is higher than the threshold value, no predictive cursor function is activated and the cursor moves as a normal cursor when the user operates a pointing device controlling the cursor. Alternatively, the predetermined action may be a user action with a keyboard (for example, a predetermined key combination) or a user action with a pointing device, for example a mouse, a touch pad, a joystick etc.

At step 104 a cursor movement action is received from the user, wherein the movement speed of the cursor is lower than a threshold value. In one embodiment, steps 102 and 104 are implemented as a single step where the activation occurs when the start to move the cursor and the movement speed of the cursor is lower than a threshold value. At step 106, a cursor position on the graphical user interface is determined. In another embodiment, step 106 may be performed after step 102 and before step 104.

At step 108 an object that is the closest object in the direction of the cursor movement in relation to the cursor position is highlighted on the graphical user interface. In other words, the cursor need not be on a certain object to highlight the object. Highlighting refers to any action that highlights the object from other objects on the graphical user interface. Highlighting comprises, for example, animation of the object, increased object size, a virtual cursor indicating the highlighted object, an additional sound or sounds, special highlighting effects for the object etc.

At step 110 the highlighted object is changed on the graphical user interface in the direction of the cursor movement action while the cursor movement action continues and the movement speed of the cursor is lower than the threshold value. In other words, the originally highlighted object changes to another highlighted object one after another as long as the cursor movement action continues and the movement speed of the cursor is lower than the threshold value. If the user selected the highlighted object, the cursor may be moved to the area of the selected object.

In one embodiment, the pace at which the highlighted object changes may have two or more levels. For example, if the user moves the pointing device very slowly (and the movement speed of the cursor is lower than the threshold value), the highlighted object changes slowly. When the user moves the pointing device a bit faster but still the movement speed of the cursor is lower than the threshold value, the highlighted object changes faster. This provides an advantage that the user is able to go through the selectable highlighted objects very quickly and when the user has nearly reached the desired object, he just slows down the movement speed of the cursor to accurately reach the desired object.

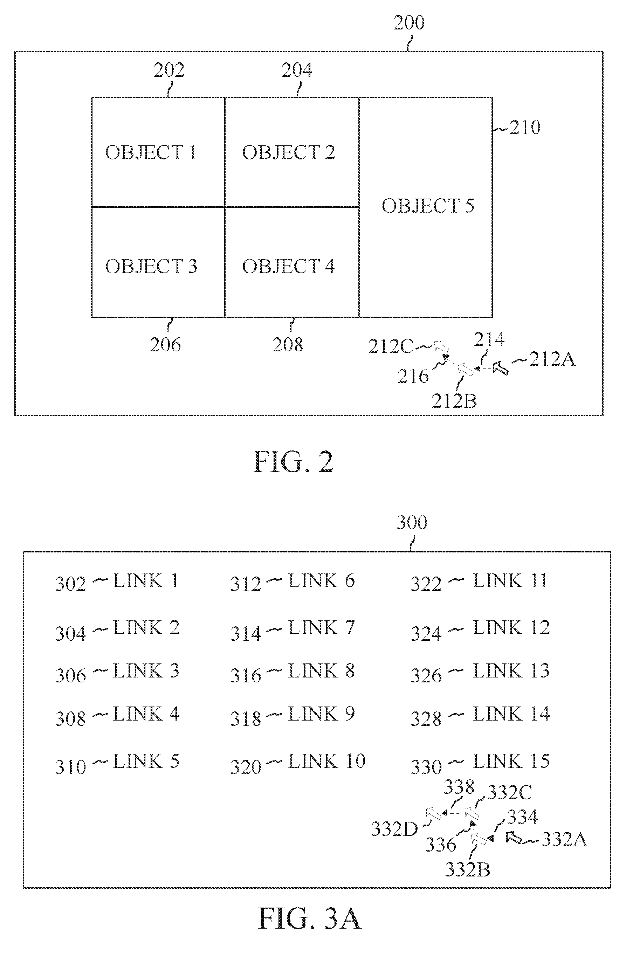

Figure 2 is a view on a graphical user interface 200 according to one embodiment of the invention. It is noted that Figure 2 is only a simplified view of the graphical user interface and the graphical user interface 200 may also comprise objects and elements not disclosed in Figure 2. The graphical user interface 200 comprises five objects 202-210. The object 210 is larger than the other objects 202-208. A cursor 212A is initially provided somewhere on the graphical user interface, in this case, on the lower right-hand corner of the graphical user interface.

When a user operates a pointing device (for example a mouse, a touch pad, joystick etc.), the position of the cursor 212A starts to shift towards a position 212B. When the movement speed of the cursor is lower than a threshold value, a predictive cursor function is activated. If the user makes a quicker cursor movement with the pointing device, the predictive cursor function is not activated. When the predictive cursor function is activated, an object that is the closest object in relation to the cursor position is highlighted. In the example of Figure 2, the closest object is the object 210. Highlighting refers to any action that highlights the object from other objects on the graphical user interface. Highlighting comprises, for example, at least one of animation of the object, increased object size, a virtual cursor indicating the highlighted object, an additional sound or sounds, special highlighting effects for the object etc. If the user does not select the object 210 and the user moves the cursor in the direction of an arrow 214 and the movement speed of the cursor is lower than the threshold value, the cursor ends up to a position 212B and the object 208 is highlighted since the object 208 is next object in the direction of the cursor movement.

Again, if the user does not select the object 208 and continues to move the cursor with a movement speed of the cursor is lower than the threshold value to a direction indicated with an arrow 216, the cursor ends up to a new position 212C. Simultaneously, the object 202 is highlighted. From the embodiment of Figure 2, it can be seen that the user is able to reach, for example, the object 202 with only small movements of the cursor instead of moving the cursor itself on the object 202 in order to be able to select the object. This is advantageous especially when the pointing device is a small touch pad. In any case, this provides a quick, intuitive and easy way to reach a desired object.

Figure 3A is a view 300 on a graphical user interface according to another embodiment of the invention. The view 300 on the graphical user interface comprises several links 302-330. Each link is selectable, and when selected, leads the user to a web page associated with the link.

As in the embodiment of Figure 2, a cursor 332A is initially provided somewhere on the graphical user interface, in this case, on the lower right-hand corner. When a user operates a pointing device (for example a mouse, a touch pad, a joystick etc.), the position of the cursor 332A starts to shift towards a position 332B. When the movement speed of the cursor is lower than a threshold value, a predictive cursor function is activated. If the user makes a quicker cursor movement with the pointing device, the predictive cursor function is not activated. In another embodiment of Figure 3A, the predictive cursor function is activated already before the cursor is actually moved. The activation may occur for example when the user places a finger on a touch pad of a device.

When the predictive cursor function is activated, a link that is the closest link in relation to the cursor position is highlighted. In the example of Figure 3A, the closest link is the link 330. Highlighting refers to any action that highlights the object from other objects on the graphical user interface. Highlighting comprises, for example, at least one of animation of the object, increased object size, a virtual cursor indicating the highlighted object, an additional sound or sounds, special highlighting effects for the object etc. If the user does not select the link 330 and the user moves the cursor in the direction of an arrow 334 and the movement speed of the cursor is lower than the threshold value, the cursor ends up to a position 332B and the link 320 is highlighted since the link 320 is next link in the direction of the cursor movement.

Again, if the user does not select the link 320 and continues to move the cursor with a movement speed of the cursor is lower than the threshold value to a direction indicated with an arrow 336, the cursor ends up to a new position 332C. Simultaneously, the link 318 is highlighted. Similarly, if the user does not select the link 318 and continues to move the cursor with a movement speed of the cursor is lower than the threshold value to a direction indicated with an arrow 338, the cursor ends up to a new position 332D. Simultaneously, the link 308 is highlighted. From the embodiment of Figure 3A, it can be seen that the user is able reach, for example, the link 308 with only small movements of the cursor instead of moving the cursor itself on the link 308 in order to be able to select the object. This is advantageous especially when the pointing device is a small touch pad. In any case, this provides a quick, intuitive and easy way to reach a desired link.

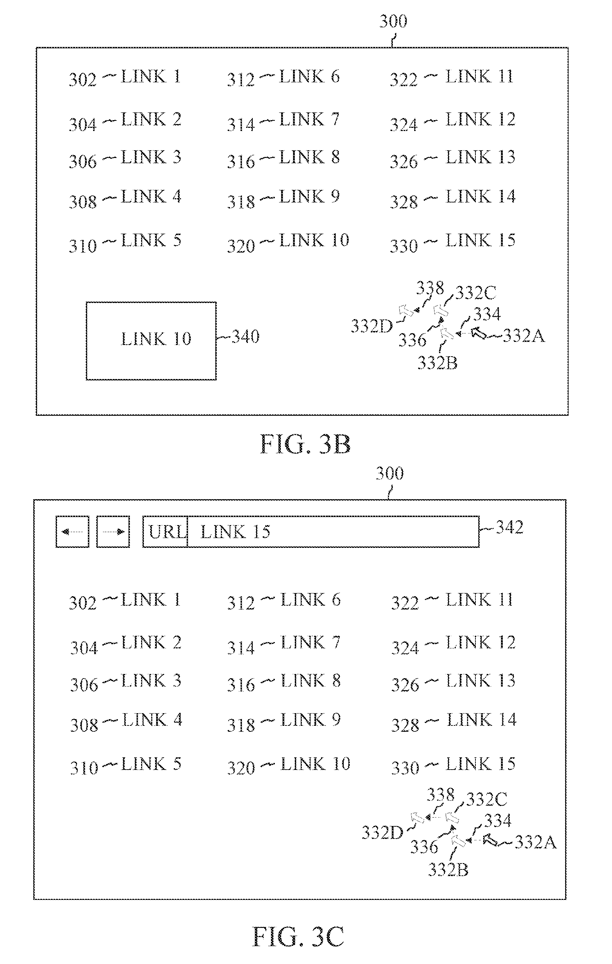

Figure 3B is a view 300 on a graphical user interface according to another embodiment of the invention. The embodiment disclosed in Figure 3B differs from the embodiment disclosed in Figure 3A only in that the highlighting of links is provided in a separate window 340. The window 340 illustrates a situation where the link 320 is highlighted in the cursor position 332B. When the user operates the pointing device to move the cursor to the position 332C, the highlighted link in the window 340 changes to link 318.

In another embodiment of Figure 3B, the window 340 may be presented on a separate display than the graphical user interface 300, e.g. on a display of a remote control device.

Figure 3C is a view 300 on a graphical user interface according to another embodiment of the invention. The embodiment disclosed in Figure 3C differs from the embodiment disclosed in Figure 3A only in that the highlighting of links is provided in a window 342 where normally address of web pages is typed. The window 342 illustrates a situation where the link 318 is highlighted in the cursor position 332C. When the user operates the pointing device to move the cursor to the position 332D, the highlighted link in the window 342 changes to link 308.

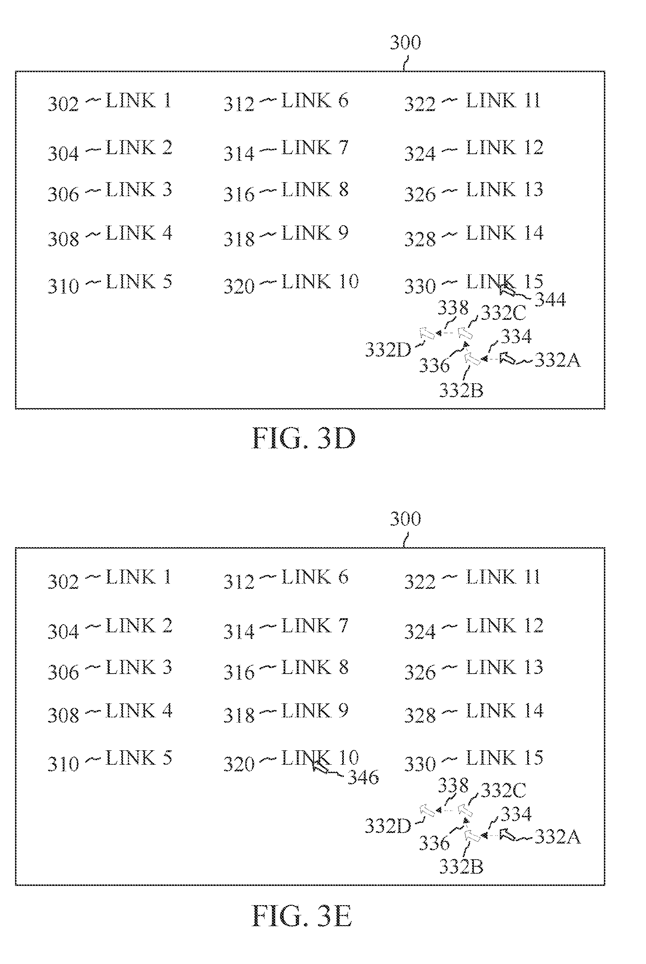

Figures 3D-3G illustrate views on a graphical user interface that provide a virtual cursor 344-350 according to one embodiment of the invention. Figures 3D-3G are identical with Figure 3A with the exception that the virtual cursor 344-350 indicates the location of a highlighted link. The term "virtual cursor" means that the virtual cursor does not indicate the position of the "real" cursor. Instead, the virtual cursor indicates only the position of the currently highlighted link. In another embodiment of Figures 3D-3G, the virtual cursor 344-350 itself act as a highlighting effect and no further highlighting of objects is used.

As in Figure 3A, a cursor 332A is initially provided somewhere on the graphical user interface 300, in this case, on the lower right-hand corner. When a user operates a pointing device (for example a mouse, a touch pad etc.), the position of the cursor 332A starts to shift towards a position 332B. When the movement speed of the cursor is lower than a threshold value, a predictive cursor function is activated. If the user makes a quicker cursor movement with the pointing device, the predictive cursor function is not activated. In another embodiment of Figure 3D, the predictive cursor function is activated already before the cursor is actually moved. The activation may occur when the user places a finger on a touch pad of a device.

When the predictive cursor function is activated, a link 330 that is the closest link in relation to the cursor position is highlighted. In the example of Figure 3A, the closest link is the link 330. Highlighting refers to any action that highlights the object from other objects on the graphical user interface 300. Simultaneously, a virtual cursor 344 is presented on or near the link 330. If the user does not select the link 330 and the user moves the cursor in the direction of an arrow 334 and the movement speed of the cursor is lower than the threshold value, the cursor ends up to a position 332B and the link 320 is highlighted since the link 320 is next link in the direction of the cursor movement. Similarly, the virtual cursor is now moved to position 346 pointing to the link 320, as illustrated in Figure 3E.

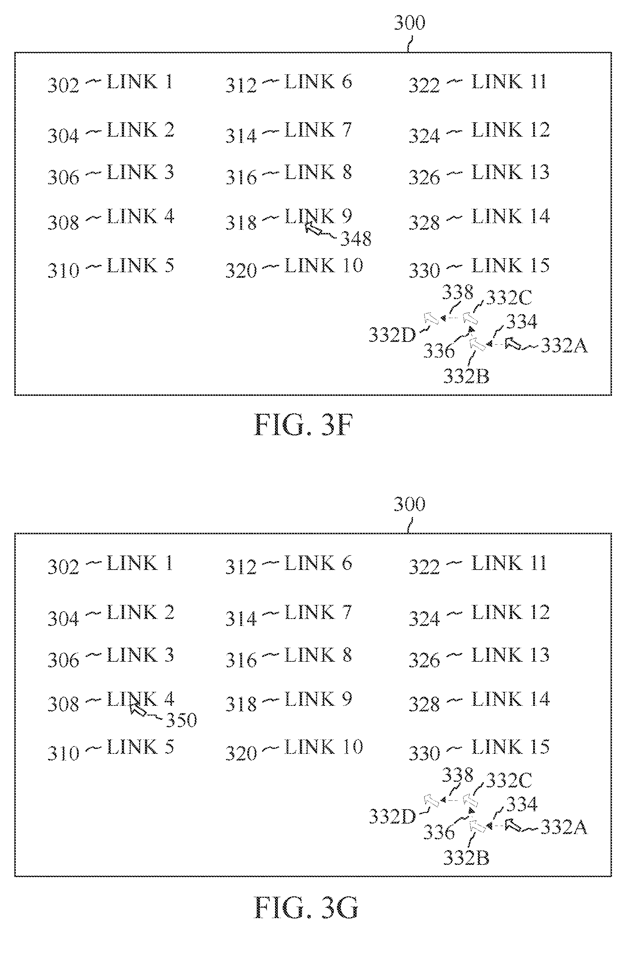

In Figures 3F and 3G, the virtual cursor continues to move to further positions, as illustrated with references 348 and 350. As can be seen from Figures 3D and 3G, while the "normal" cursor has moved from the position 332A to the position 332D, the virtual cursor has moved from the position 344 to the position 350.

In another embodiment of Figure 3D-3G, the virtual cursor may be provided in a separate window that discloses a miniature view of the view 300 of Figure 3A and where the virtual cursor indicates the position of the currently highlighted link.

In one embodiment of the invention, the predictive cursor function may remain active sometime after the cursor movement action from the user ends. For example, the latest highlighted object may remain highlighted a predetermined time, for example five seconds, after the cursor movement action ends. During the predetermined time, the user is still able to select the highlighted object. After the predetermined time has elapsed, future movements of the normal cursor start again from the latest position of the normal cursor.

Figures 3A-3G disclosed that the normal cursor 332A moves slightly when the user performs actions when the predictive cursor function is active. In another embodiment, the position of the cursor 332A may stay remain unchanged when the predictive cursor function is active.

In the embodiments disclosed above, a selection of a highlighted object may be performed by using any appropriate action with the pointing device. Such an action may comprise a press of a left or right button of a mouse or other pointing device, a tap on a touch pad etc. Furthermore, as a further example, when the predictive cursor action is active, the left button may be used to select the currently highlighted object and the right button to select an object on which the normal cursor may be positioned.

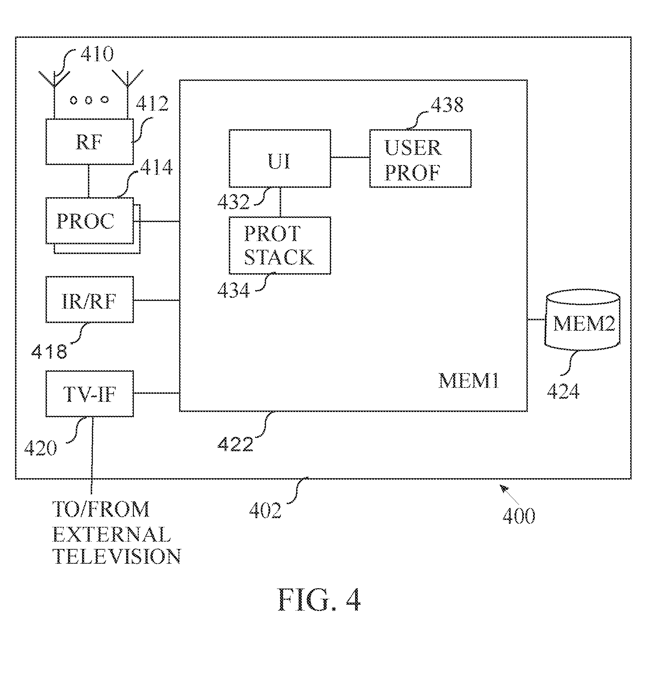

Figure 4 is a block diagram illustrating an apparatus according to one embodiment of the invention. In Figure 4 there is an apparatus 400, which is, for example, a computer, a browser node, a mobile node, user equipment, a handset, a cellular phone, a mobile terminal, an Application Specific Integrated Circuit (ASIC), a chip or a chipset. The internal functions of apparatus 400 are illustrated with a box 402. Apparatus 400 may comprise at least one antenna 410. There may also be multiple input and output antennas. In association with mobile node there may be a Radio Frequency (RF) circuit 412. In another embodiment, the at least one antenna 410 and the RF circuit 412 are optional elements of the apparatus 400. The RF circuit 412 may be also any circuit or may be referred to as circuit 412. RF circuit 412 is communicatively connected to at least one processor 414. Connected to processor 414 there may be a first memory 422, which is, for example, a Random Access Memory (RAM). There may also be a second memory 424, which may be a non-volatile memory, for example, an optical or magnetic disk. There may also be an infrared or radio frequency (IR/RF) transmitter/receiver 418. There may also be an optional interface 420 to an external television (not shown) .

In memory 422 there may be stored software relating to functional entities 432 and 434. A user interface entity 432 may provide a graphical user interface to be displayed on a screen, e.g. on a television screen connected to the browser node 400 via the interface 420. The user interface entity 432 may communicate with an external remote control unit (not shown) via the infrared or radio frequency (IR/RF) transmitter/receiver 418. The User interface entity 432 may communicate with a base station using a protocol stack 434. In another embodiment, the apparatus 400 may comprise network interface means other than the RF circuit 412.

Protocol stack entity 434 comprises control plane protocol functions related to the interface e.g. towards a base station such as, for example, a UMTS Node B. Protocol stack entity 434 may also comprise protocol functionalities related to user plane data communication with the content server. Protocol stack entity 434 may be, for example, an internet protocol stack.

When the at least one processor 414 executes functional entities associated with the invention, memory 422 comprises entities such as, any of the functional entities 432 and 434. The functional entities within the apparatus 400 illustrated in Figure 4 may be implemented in a variety of ways. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The functional entities may be implemented as separate computer programs or as a single computer program comprising several routines or functions implementing the entities. The program blocks are stored on at least one computer readable medium such as, for example, a memory circuit, memory card, magnetic or optical disk. Some functional entities may be implemented as program modules linked to another functional entity. The functional entities in Figure 4 may also be stored in separate memories and executed by separate processors, which communicate, for example, via a message bus or an internal network within the network node. An example of such a message bus is the Peripheral Component Interconnect (PCI) bus.

The apparatus 400 may not always contain all the elements disclosed in Figure 4, and thus, these elements (for example, one or more from references 410, 412, 418, 420, 424) may be optional elements.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks Public Switched Telephone Network (PSTNs) , Packet Data Networks (PDNs) , the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices, or one or more software entities such as modules.

The exemplary embodiments can store information relating to various processes described herein. This information can be stored in one or more memories, such as a hard disk, optical disk, magneto-optical disk, RAM, and the like. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of one or more application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

The embodiments of the invention described herein may be used in any combination with each other. Several of the embodiments may be combined together to form a further embodiment of the invention.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method, comprising:
causing display of information content comprising objects on a graphical user interface;
activating a predictive cursor function in response to identifying a predetermined action from a user;
receiving a cursor movement action from the user, wherein the movement speed of the cursor is lower than a threshold value;
determining a cursor position on the graphical user interface;
highlighting on the graphical user interface an object that is the closest object in the direction of the cursor movement in relation to the cursor position; and
changing the highlighted object on the graphical user interface in the direction of the cursor movement while the cursor movement action continues and the movement speed of the cursor is lower than the threshold value.

2. The method according to claim 1, further comprising:
when the cursor movement action ends, keeping highlighted the object that was the latest highlighted object.

3. The method according to any of claims 1 - 2, the method further comprising:
causing display of the information content in a first window; and
wherein the highlighting comprises highlighting the object in a second window.

4. The method according to any of claims 1 - 3, further comprising:
providing a virtual cursor indicating the location of the highlighted object.

5. The method according to any of claims 1 - 4, further comprising:
receiving a selection of the highlighted object; and
moving the cursor to the area of the selected object.

6. The method according to any of claims 1 - 5, wherein the predetermined action comprises one of the following:
a cursor movement action, wherein the movement speed of the cursor is lower than a threshold value;
a predetermined user action with a keyboard;
a predetermined user action with a pointing device.

7. The method according to any of claims 1 - 6, wherein an object comprises a selectable graphical object or a selectable textual link.

8. The method according to any of claims 1 - 7, wherein highlighting comprises at least one of the following:
a sound or sounds;
animation of the object;
increased object size;
a virtual cursor.

9. A computer program comprising program code for implementing the method of any of claims 1 - 8.

10. The computer program of claim 9, wherein the computer program is embodied on a computer-readable medium.

11. An apparatus comprising
means for causing display of information content comprising objects on a graphical user interface;
means for activating a predictive cursor function in response to identifying a predetermined action from a user;
means for receiving a cursor movement action from the user, wherein the movement speed of the cursor is lower than a threshold value;
means for determining a cursor position on the graphical user interface;
means for highlighting on the graphical user interface an object in the direction of the cursor movement that is the closest object in relation to the cursor position; and
means for changing the highlighted object on the graphical user interface in the direction of the cursor movement while the cursor movement action continues and the movement speed of the cursor is lower than the threshold value.

12. The apparatus according to claim 11, further comprising:
means for keeping highlighted the object that was the latest highlighted object, when the cursor movement action ends.

13. The apparatus according to claim 11 or 12, further comprising:
means for causing display of the information content in a first window; and
wherein the highlighting comprises highlighting the object in a second window.

14. The apparatus according to any of claims 11 - 13, further comprising:
means for providing a virtual cursor indicating the location of the highlighted object.

15. The apparatus according to any of claims 11 - 14, further comprising:
means for receiving a selection of the highlighted object; and
means for moving the cursor to the area of the selected object.

16. The apparatus according to any of claims 11 - 15, wherein the predetermined action comprises one of the following:
a cursor movement action, wherein the movement speed of the cursor is lower than a threshold value;
a predetermined user action with a keyboard;
a predetermined user action with a pointing device.

17. The apparatus according to any of claims 11 - 16, wherein an object comprises a selectable graphical object or textual link.

18. The apparatus according to any of claims 11 - 17, wherein highlighting comprises at least one of the following:
a sound or sounds;
animation of the object;
increased object size;
a virtual cursor.
